# EUROPEAN PATENT SPECIFICATION

(11) **EP 0 597 167 B1**
(45) Date of publication and mention of the grant of the patent: **14.10.1998**
(21) Application number: 93100071.5
(22) Date of filing: 05.01.1993
(51) Int. Cl.: A23K 1/17, A23K 1/18

(54) **Veterinary preparation containing an antibiotic mixture of gentamicin and lincomycin as an additive to drinking water or animal feed and its use in pig breeding**
Antibiotische Mischung von Gentamicin mit Lincomycin enthaltendes, veterinäres Präparat als Zusatzmittel für Trinkwasser oder Tierfutter und dessen Verwendung in der Aufzucht von Schweinen
Composition vétérinaire contenant un mélange antibiotique de gentamicine et lincomycine comme additif pour l'eau potable ou pour la nourriture pour animaux et son utilisation dans l'élevage de porcs

(30) Priority: 11.08.1992 SI 16792
(43) Date of publication of application: 18.05.1994
(73) Proprietor: LEK, tovarna farmacevtskih in kemicnih izdelkov, d.d., Ljubljana, SI-61107 Ljubljana (SI)
(72) Inventor: Sever, Bojan, 61210 Ljubljana-Sentvid (SI)
(74) Representative: Müller-Boré & Partner Patentanwälte

(56) References cited:
- EP-A- 26 746
- EP-A- 32 304
- GB-A- 2 159 409
- US-A- 3 261 687

## Description

The present application is a Patent of Addition to the Slovenian Patent Application P-9200002 and relates to a veterinary composition as an additive to drinking water or animal feed, which contains an antibiotic mixture of gentamicin and lincomycin, both being also in the form of free bases or acid addition salts such as gentamicin sulfate and lincomycin hydrochloride, for use in the prophylaxis of colibacilliosis and enzootic pneumonia and therapy of dysentery of pigs and, consequently, for increasing the gain In their body weight, reducing the losses, reducing the number of poorly developed animals and improving the utilization of feed (conversion).

In intensive pig breeding the biggest losses in weanling pigs are caused by gastrointestinal and pneumonic diseases, therefore a constant need exists for an efficient prophylaxis and therapy of these infections with efficient antibiotics or combinations thereof as additives to drinking water or animal feed, whereby also the gain in body weight would be increased and mortality of piglets would be reduced.

From the literature the use of different antibiotics and combinations of antibiotics is known, which are added to animal feed and drinking water for prophylaxis and treatment of fattening animals and which at the same time act on the gain in body weight. Lincomycin is a known antibiotic described in US patent 3,086,912, which inhibits the growth and propagation of numerous microorganisms, particularly of gram-positive bacteria such as species Staphylococcus, Streptococcus, Clostridium, Bacillus anthracis and Corybacterium, of some gram-negative bacteria, such as Bordetella and Haemophilus, of some species Nocardia, and of Actinomyces. It is specially effective against Treponema hyodysenteriae, Mycoplasma hyopneumoniae and Mysoplasma galliseticum. Upon sensitive microorganisms it acts bacteriostatically, at higher concentrations (2 to 3 fold MIC value) also bactericidally.

In US patent 3,155,580, there are described galenic forms on the basis of lincomycin and of its acid addition salts as the active ingredient for the treatment of infections in humans and animals caused by bacteria. In fattening animals the antibiotic can be used prophylactically and for the increase in the gain in body weight.

From US Patent 3,150,042 the use of lincomycin for prophylactic and therapeutical treatment of coccidiosis in animals is known, whereat the antibiotic is used as an additive to usual animal feed or to an appropriate amount of drinking water. There is also described the administration of tablets and sterile injection solutions.

Gentamicin is an antibiotic described in US Patents 3,091,572 and 3,136,704 and it consists of three structurally related components, gentamicins C₁, C₂ and C₁ₐ. Well-known is also gentamicin A, whose structure differs from other components of the complex. In galenic forms gentamicin occurs in the form of C complex sulfate (gentamicin sulfate). Gentamicin is a very effective antibiotic against gram-positive and gram-negative microorganisms such as species Staphylococcus, Pneunomonas and Proteus and is used in both human and veterinary medicine.

Spectinomycin is an antibiotic isolated from the fermentation broth of Streptomyces spectabilis and is described in US Patent 3,234,094. Spectinomycin is active against Mycoplasma, some gram-positive and most of gram-negative bacteria and is used in veterinary medicine. In US Patent 3,245,497 there is described an animal feed containing spectinomycin in an amount effective for speeding up the growth of fattening animals.

EP-A-0 026 746 describes a pharmaceutical preparation and a process for increasing the antibiotic efficiency of antibiotics, which are based on the combination of one or more antibiotics and muramylpeptide of the formula I. Particularly muramylpeptides of the formula II can be used. Among the numerous cited possible antibiotics, gentamicin as an aminoglycosidic antibiotic and lincomycin or clindamycin as a lincomycinic antibiotic can be used. The examples demonstrate the use of only one antibiotic in the combination with muramylpeptides and necessarily muramylpeptides must always be used in combination with an antibiotic.

GB-A-2 159 409 describes a synergistic antibiotic combination useful for the treatment of respiratory, gastrointestinal as well as urinary infections and septicaemia of domestic animals, comprising tiamulin hydrogen fumarate and an aminoglycosidic antibiotic such as gentamicin or pharmaceutically acceptable salts thereof in a mass ratio of from 1:5 to 5:1. Example 5 shows a combination of tiamulin and gentamicin in a mass ratio of 4:1. The lincomycin antibiotics used in addition to gentamicin in the present application are structurally entirely different from tiamulin.

WO-A-8 500 515 describes *inter alia* the antimicrobial agents gentamycin and clindamycin coencapsulated in one liposome preparation for the treatment of anaerobic infections, wherein this liposome preparation is applied intraperitoneal.

In US Patent 3,261,687 there is described an animal feed containing a combination of antibiotics spectinomycin (in the form of sulfate salt) and lincomycin (in the form of hydrochloride salt) and a method for increasing the gain in the body weight in fattening animals, where the ratio of antibiotics in the animal feed composition or in drinking water is from 1 to 10 parts by weight of spectinomycin and 1 part by weight of lincomycin. It is reported that with such a combination of antibiotics in animal feed or drinking water unexpectedly good results in the increase in the gain in the body weight and its adding rate are achieved. A combination of both antibiotics In the animal feed acts synergistically and is also suitable for therapeutic and prophylactic treatment of infections in animals to be fattened.

Further, from US Patent 3,679,787 there is known a combination of lincomycin and spectinomycin in a dosage unit, in a combination with carriers, which is suitable for treating animal diseases because of the synergistic activity of the combination against infections by Mycoplasma.

Tiamulin, a semisynthetic antibiotic with a broad spectrum of antimicrobic activity, is described in US Patent 3,919,290 and especially acts on Mycoplasmas but also on a number of gram-positive and gram-negative bacteria. In the veterinary medicine it is used in the prophylaxis and therapy of bloody dysentery and enzootic pneumonia in pigs as well as of other infections caused by microorganisms sensitive to tiamulin (in the form of hydrogen fumarate). It is also used in the prophylaxis and therapy of animal respiratory diseases caused by mycoplasmas and secondary infections.

The present invention is based on the task to find an efficient combination of antibiotics in the composition of a veterinary formulation as an additive to drinking water and animal feed for use in the prophylaxis of colibacilliosis and enzootic pneumonia and therapy of dysentery and, consequently, for increasing the gain in their body weight, reducing the losses as well as reducing the number of poorly developed animals and their death rate. The results obtained by such a combination of antibiotics In the composition of the veterinary formulation as an additive to drinking water or animal feed should be superior to the action of individual antibiotics or of well-known combinations of antibiotics for the same purposes, thus representing a valuable improvement in pig breeding.

In the Slovenian Patent Application P-9200002 there is described an animal feed and an additive to animal feed or to drinking water in poultry breeding, which contains a mixture of antibiotics of 1 part by weight of gentamicin sulfate and 5 to 60 parts by weight of lincomycin hydrochloride, for prophylaxis and therapy of infections and thus for increasing the gain in their body weight, whereby the efficiency factor was increased at low feed conversion and the total death rate was reduced.

In intensive pig breeding, the biggest losses in weanling pigs, i.e. in pigs after they have stopped sucking at the age of about three weeks, are caused by gastrointestinal and pneumonic diseases. Gastrointestinal diseases are primarily caused by E. coli, which causes disturbances in the intestinal tract of a newborn piglet and also at older age, especially after weaning. E. coli is a natural inhabitant of the digestive tract as a saprophyte together with many other bacteria, whereat at changed conditions in organism some strains of E.coli cause a disease.

Pathological states in animals are provoked only by those variants of E.coli that are able to produce enterotoxins. The term coliinfection of pigs is to be understood as a complex of gastrointestinal diseases of diarrhoeatical character. Three forms of diseases, which are connected to the age of piglets, can be distinguished: colidiarrhoea of newborn pigs from the seventh day, colibacilliosis of sucking pigs older than ten days, and coligastroenteritis and colienterotoxemy of weanling pigs.

Another disease causing considerable direct and indirect losses (deaths and deaths as a result of poor development of pigs as a result of the disease) in intensive pig breeding is enzootic mycoplasmotic pneumonia. This disease is primarily caused by Mycoplasma hyopneumoniae. In worsened microclimatic conditions, in cooperation with some bacteria, it causes a chronic disease of high morbidity and low lethality (death). In pigs of the age of 3 to 8 weeks the disease runs acutely and in bad microclimatic conditions the lethality can be higher than 10 %. The death appears mainly because of secondary bacterial infections. A pig with enzootic pneumonia has smaller gain in weight and a smaller conversion.

In our research regarding the possibilities of preventing coliinfections and enzootic pneumonia of weanling pigs, it was surprisingly found that by adding the novel composition of the present invention to drinking water or usual pig feed the desired aim is achieved and its efficiency regarding the prophylactic and therapeutic characteristics is superior to that of some well-known commercial compositions for the same purpose.

The composition of the present invention includes lincomycin and gentamicin, possibly in the form of free bases and preferably in the form of their pharmaceutically acceptable acid addition salts such as lincomycin hydrochloride and gentamicin sulfate, in parts by weight from 1:1 to 1:10, in addition to the usual water-soluble basis. The best results are achieved with the ratio of lincomycin hydrochloride : gentamicin sulfate from 1:1 to 1:3. The composition of the present invention can be added to drinking water or usual animal feed.

The composition is administered from the first day of weaning on.

The composition of the present invention was clinically tested on pigs in comparison with the commercial composition Linco-Spectin® 44 Premix containing equal parts of lincomycin hydrochloride and spectinomycin sulfate, and with the commercial composition Tiavet® P 2 % powder containing tiamulin hydrogen fumarate, which can be both added to drinking water or to usual pig feed in accordance with the producer's recommendations.

The obtained results of comparative clinical testings on pigs demonstrated - which is also illustrated in the Examples - that an application of the composition of the present invention, in comparison with commercial compositions, reduces the total losses and deaths with symptoms of dysentery and pneumonia during breeding, reduces the percentage of poorly developed pigs with no deaths occurring among them and, additionally, the conversion (use of food) is the lowest at applying the composition of the present invention, therefore the average daily gain in body weight is improved.

On the basis of the obtained results, the composition of the present invention can be administered for prophylaxis of colibacilliosis and enzootic pneumonia and therapy of dysenthery in pigs and therefore for increasing the gain in their body weight.

The combination of both antibiotics is added in a concentration from 1 mg/ml to 200 mg/ml of drinking water, yet the best results are obtained with a concentration of both antibiotics of about 50 mg/ml drinking water.

The combination of both antibiotics is added to animal feed for pigs in a total concentration from 0.5 kg/t to 5 kg/t, preferably about 1.5 kg/t of solid food.

The invention is illustrated, yet not limited by the following Examples:

### EXAMPLES

### Example 1

Comparative clinical testing of a combination of the antibiotics of the present invention (lincomycin-gentamicin), of a combination lincomycin-spectinomycin and of tiamulin in pigs

A comparative testing of the above-named antibiotics or combinations of antibiotics was carried out in order to clinically test the efficiency of the combination of antibiotics of the present invention for the prophylaxis of colibacilliosis and enzootic pneumonia in pigs and thus to establish the gain in body weight.

The combination of antibiotics of the present invention was prepared in the form of a powdery composition with following ingredients:

| | |
|---|---|
| lincomycin hydrochloride | 1.5 g |
| gentamicin sulfate | 4.0 g |
| polyethylene glycol 4000 powder | 2.0 g |
| lactose | 42.5 g |
| | 50.0g |

The composition was prepared by mixing fine-grained solid ingredients in a mixer, and could then he added to drinking water or animal feed.

The combination of antibiotics lincomycin-spectinomycin was applied in the form of the commercial composition Linco-Spectin® 44 Premix (Upjohn Comp., USA) containing lincomycin hydrochloride and spectinomycin sulfate in a ratio of 1:1, whereas tiamulin was applied in the form of the commercial composition Tiavet® P 2% powder (Pliva, Croatia) containing tiamulin hydrogen fumarate.

In the clinical testing of the composition of the present invention three groups of weanling pigs were included:
- a group of 1620 weanling pigs receiving the composition of the present invention,
- a group of 1687 weanling pigs receiving the composition Linco-Spectin® 44 premix,
- a group of 1602 weanling pigs receiving the composition Tiavet® P 2% powder.

Piglets of all three groups were of the same genetic origin.

The composition of the present invention was added to drinking water in a dose of 50 g to 100 l of water from the first to 21st day after weaning.

In animals receiving the composition of the present invention in drinking water no side effects were observed.

Before settling the test animals, the building was washed with hot water under pressure and disinfected with the composition Virkon® (Krka, Slovenia), which is an equilibrated and stabilized mixture of peroxide compounds, surfactants, organic acids and an organic buffer system. The main ingredient is potassium peroxisulfate (50%).

Immediately after settling, the piglets received the vitamin composition BCK-forte+E powder (Alkaloid, Skopje, Macedonia) containing vitamins A, B₃, E, C, B₁, B₂, B₆ and B₁₂ in drinking water in a dose of 200 g to 100 l of water for 2 days.

From the first to 21st day after weaning the piglets received the composition of the present invention in drinking water in a dose of 50 g to 100 l of water.

In tested piglets the appearance of diarrhoea and pneumonia as well as deaths were monitored daily. The pigs were weighed at weaning and at moving to the fattening place (Tables 2 and 3).

The results of tests at which the composition of the present invention was used are shown in Tables 2, 3, 4, and 5.

During the period of clinical testing of the composition of the present invention, 26 piglets (1.6%) falling behind in the gain in the body weight were separated in two separate boxes. By the time of moving into the fattening place, none of these pigs had died.

During the breeding period, 3.45% of piglets with diarrhoea symptoms and 1.3% of piglets with pneumonia symptoms died (Table 3).

### COMPARATIVE TESTING

Simultaneously two groups of pigs were tested in same age period and in equal sties.

Before settling the piglets, both buildings were washed with hot water and then disinfected with the composition Virkon® (Krka, Slovenia).

In the first comparative group there were 1687 weanling pigs receiving the product Linco-Spectin® 44 premix in the feed, in accordance with the producer's recommendations, in a dose of 1 kg to 1 tonne of feed for 21 days.

Due to the technological process of the farm, the medicine was administered to the piglets beginning with the eighth day after weaning.

In the second comparative group, there were 1602 weaning pigs receiving the composition Tiavet® P 2% powder in the feed, in accordance with the producer's recommendations, in a dose of 1.25 g to 1 tonne of feed for 21 days (Table 1). Also to this group the composition was administered beginning with the eighth day after weaning.

In addition to the above-mentioned antibiotics in feed, the piglets in parallel testing were also receiving the vitamin composition BCK-forte+E in drinking water in a dose of 200 g to 100 l of water for 2 days.

In the animals in parallel testing, the appearance of diarrhoea and pneumonia as well as deaths were monitored daily.

The pigs were weighed at weaning and at moving to the fattening place (Tables 2 and 3).

During the period of clinical testing, 89 poorly developed piglets (5.28%) were separated from the group receiving Linco-Spectin® 44 premix, and 27 of them died (30.3 %). From the group receiving Tiavet® P 2% powder, 112 piglets (6.9 %) falling behind in the gain in the body weight were separated and 38 of them died (33.9%).

**TABLE 1**

| Number of animals in groups, the product and administration | | | |
|---|---|---|---|
| Composition | Number of animals | Dose | Administ.time (days) |
| of this invention | 1620 | 50 g/100 l of water | 21 |
| Linco-Spectin® 44 premix | 1687 | 1 kg/1 t of feed | 21 |
| Tiavet® P 2% | 1602 | 1.25 kg/1 t of feed | 21 |

**TABLE 2**

| Average body weight of piglets at weaning, at removing to fattening place and average daily gain | | | |
|---|---|---|---|
| Composition | Body weight at weaning | Body weight at moving | Average daily gain of the body weight |
| of this invention | 7.32 kg | 30.17 kg | 375 g |
| Linco-Spectin® 44 premix | 7.11 kg | 27.91 kg | 346 g |
| Tiavet® P 2% | 7.20 kg | 28.31 kg | 329 g |

Table 2 shows that the group of piglets receiving the composition of the present invention in drinking water reached the biggest average body weight and the biggest daily gain by the time of moving to the fattening place.

**TABLE 3**

| Total losses and deaths with symptoms of diarrhoea or pneumonia, and conversion of feed during breeding period | | | | | |
|---|---|---|---|---|---|
| Composition | Number of animals | Losses (%) | Deaths | | Conversion |
| | | | Diarrhoea (%) | Pneumonia (%) | |
| of this invention | 1620 | 4.75 | 3.45 | 1.30 | 2.16 |
| Linco-Spectin® 44 premix | 1687 | 7.05 | 5.10 | 1.95 | 2.22 |
| Tiavet® P 2% | 1602 | 9.42 | 6.05 | 3.37 | 2.38 |

Table 3 shows that in the group receiving the composition of the present invention, the total losses and deaths with symptoms of diarrhoea and pneumonia during the breeding time were the lowest in comparison with the groups in parallel testing.

The conversion is the lowest in the group receiving the composition of the present invention.

**TABLE 4**

| Number of poorly developed piglets and share of their deaths | | | | |
|---|---|---|---|---|
| Composition | Poorly developed animals | | Deaths | |
| | number | (%) | number | (%) |
| of this invention | 26 | 1.6 | / | / |
| Linco-Spectin® 44 premix | 89 | 5.28 | 27 | 30.3 |
| Tiavet® P 2% | 112 | 6.99 | 38 | 33.9 |

Table 4 shows that the group receiving the composition of the present invention has the lowest percentage of poorly developed piglets and that none of them died in this group, whereas in the comparative group more than 30% of them died.

In Table 5, the total results of all groups receiving the composition of the present invention, Linco-Spectin® 44 premix and Tiavet® P 2% are shown.

A summary of the results of clinical testing of the composition of the present invention:

Clinical testing of the composition of the present invention in weanling pigs showed that the composition does not have any side effects.

The group of weanling pigs receiving the composition of the present invention showed better results in comparison with comparative groups receiving the commercial compositions Linco-Spectin® 44 premix and Tiavet® P 2% with regard to:
- average daily gain,
- average feed conversion,
- percentage of total losses,
- percentage of dead piglets with pneumonia symptoms,
- percentage of dead piglets with diarrhoea symptoms,
- percentage of poorly developed piglets
- percentage of poorly developed piglets that died.

**TABLE 5**

| Results of testing with the composition | | composition of this invention | LINCO-SPECTIN® 44 premix | TIAVET® P 2% |
|---|---|---|---|---|
| | active amount | gentamicin sulfate + lincomycin.HCl | Lincomycin.HCl spectinomycin sulfate | Tiamulin hydrogen fumarate |
| Number of weanling pigs | | 1620 | 1687 | 1602 |
| Total weight of weanling pigs | kg | 11858.40 | 11994.57 | 11534.40 |
| Average age of weanling pigs | days | 30.22 | 29.55 | 29.37 |
| Average weight of weanling pigs | kg | 7.32 | 7.11 | 7.20 |
| Administration of medicines | days | 21 | 21 | 21 |
| Breeding period | days | 63 | 65 | 66 |
| Average weight at the end | kg | 30.17 | 27.91 | 28.31 |
| Average daily gain | g | 375 | 346 | 329 |
| Average feed conversion | kg | 2.16 | 2.22 | 2.38 |
| Feed consumption/fattening day | kg | 0.81 | 0.77 | 0.79 |
| Number of weanling pigs | | 1620 | 1687 | 1602 |
| Losses | number of animals | 77 | 119 | 151 |
| Losses | % | 4.75 | 7.05 | 9.43 |
| Number of dead piglets - diarrhoea | | 56 | 86 | 97 |
| Number of dead piglets - pneumonia | | 21 | 33 | 54 |

### Example 2

The percentage composition of animal feed for pigs to which the combination of the present invention is added can be made up of following ingredients:

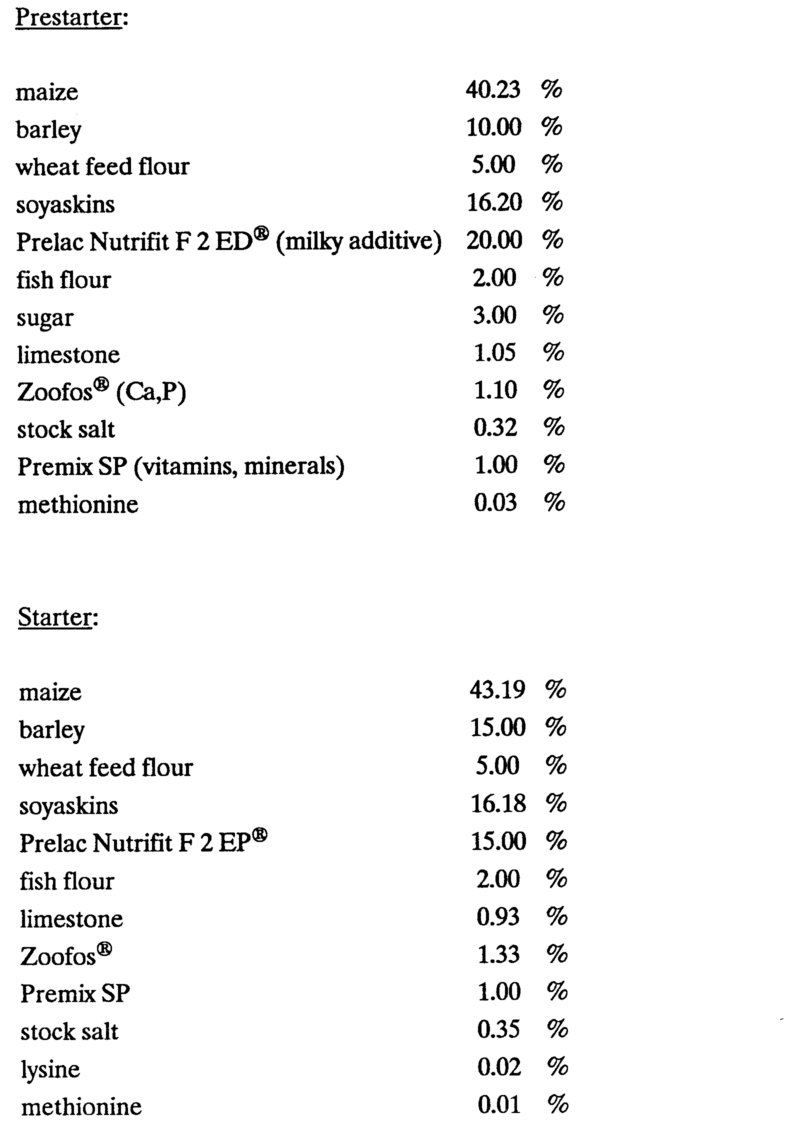

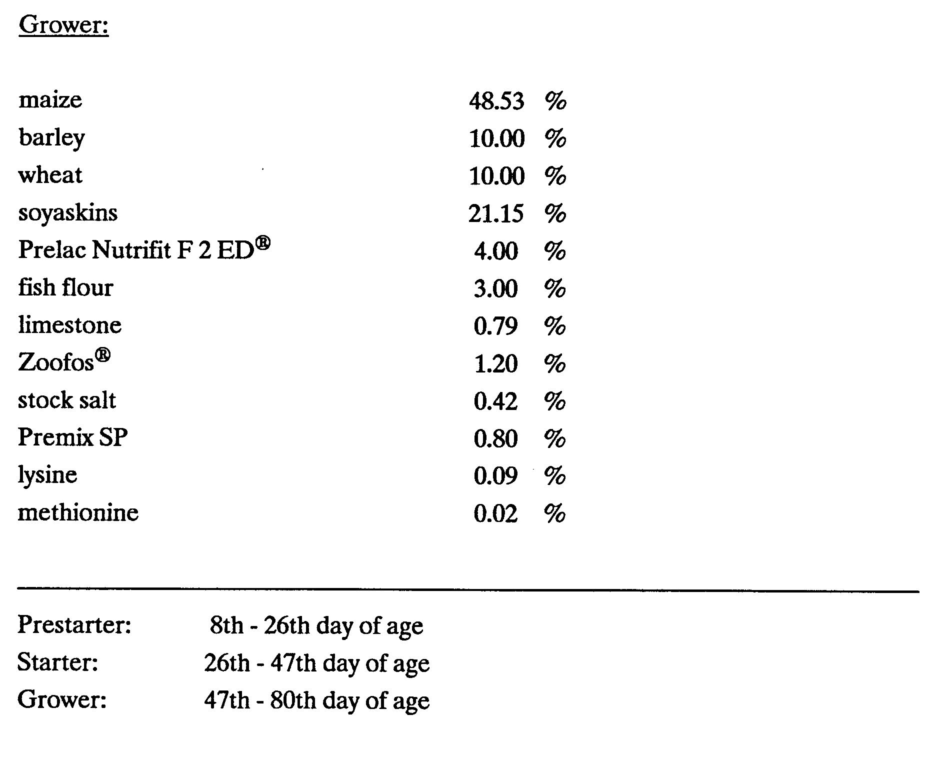

## Claims

1. A veterinary composition as an additive to drinking water or to animal feed for pigs, characterised in that it contains an antibiotic mixture of 1 part by weight of lincomycin and 1 to 10 parts by weight of gentamicin or their pharmaceutically acceptable acid addition salts with a water-soluble carrier.

2. A veterinary composition as an additive to drinking water or to animal feed for pigs according to claim 1, characterised in that it contains an antibiotic mixture of 1 part by weight of lincomycin hydrochloride and 1 to 3 parts by weight of gentamicin sulfate.

3. A veterinary compositon as an additive to drinking water or to animal feed for pigs according to claims 1 or 2 for use in the prophylaxis of colibacilliosis and enzootic pneumonia and therapy of dysentery and hence for increasing the gain in their body weight and to improve the feed utilization in pigs.

## Patentansprüche

1. Veterinäres Präparat als Zusatzmittel für Trinkwasser oder Tierfutter für Schweine, dadurch gekennzeichnet, daß es eine antibiotische Mischung von 1 Gewichtsteil von Lincomycin und 1 bis 10 Gewichtsteilen von Gentamicin oder ihren pharmazeutisch annehmbaren Säureadditionsalzen mit einem wasserlöslichem Träger enthält.

2. Veterinäres Präparat als Zusatzmittel für Trinkwasser oder Tierfutter für Schweine gemäß Anspruch 1, dadurch gekennzeichnet, daß es eine antibiotische Mischung von 1 Gewichtsteil Lincomycinhydrochlorid und 1 bis 3 Gewichtsteilen Gentamicinsulfat enthält.

3. Veterinäres Präparat als Zusatzmittel für Trinkwasser oder Tierfutter für Schweine gemäß Ansprüchen 1 oder 2 für die Verwendung in der Vorbeugung von Colibazilliosis und enzootischer Lungenentzündung und in der Behandlung von Dysenterie und dadurch zur Zunahine deren Körpergewichts und zum Verbessern der Futterausnutzung bei Schweinen.

## Revendications

1. Composition vétérinaire à titre d'additif pour l'eau de boisson ou pour des aliments pour animaux destinés aux porcs, caractérisée en ce qu'elle contient un mélange antibiotique de 1 partie en poids de lincomycine et de 1 à 10 parties en poids de gentamicine ou de leurs sels d'addition d'acides pharmaceutiquement acceptables avec un véhicule soluble dans l'eau.

2. Composition vétérinaire à titre d'additif pour l'eau de boisson ou pour des aliments pour animaux destinés aux porcs, suivant la revendication 1, caractérisée en ce qu'elle contient un mélange antibiotique de 1 partie en poids de chlorhydrate de lincomycine et de 1 à 3 parties en poids de sulfate de gentamicine.

3. Composition vétérinaire à titre d'additif pour l'eau de boisson ou pour des aliments pour animaux destinés aux porcs, suivant la revendication 1 ou 2, à utiliser pour la prophylaxie de la colibacillose et de la pneumonie enzootique, ainsi que pour la thérapie de la dysenterie et, en conséquence, pour augmenter le gain de poids corporel des porcs et pour améliorer l'utilisation des aliments par les porcs.
